# EUROPEAN PATENT SPECIFICATION

(11) **EP 4 339 419 B1**
(45) Date of publication and mention of the grant of the patent: **05.11.2025**
(21) Application number: 22196059.4
(22) Date of filing: 16.09.2022
(51) Int. Cl.: E21D 21/00, E21F 17/18

(54) **A SENSOR APPARATUS FOR USE IN A TUNNEL**
SENSORVORRICHTUNG ZUR VERWENDUNG IN EINEM TUNNEL
APPAREIL DE CAPTEUR DESTINÉ À ÊTRE UTILISÉ DANS UN TUNNEL

(43) Date of publication of application: 20.03.2024
(73) Proprietor: Sandvik Mining and Construction Australia (Production/Supply) Pty Ltd, Milton QLD 4064 (AU)
(72) Inventor: VALLATI, Osvaldo, 4064 Milton (AU)
(74) Representative: Sandvik

(56) References cited:
- EP-A1- 3 839 204
- CN-A- 114 934 796
- CN-U- 211 904 054
- US-A1- 2018 313 707

## Description

### Technical Field

The present invention relates to a sensor apparatus for use in a tunnel, principally, but not exclusively for use in the underground mining industry. More specifically the sensor apparatus is for use with rock bolts which reinforce the rock strata defining the tunnel, and to detect, over time, convergence in the vicinity of the rock bolts. It will be convenient to hereinafter describe the invention with reference to this particular application however the invention may also be suitable for monitoring movement of other reinforced rock strata, such as on engineering batters on roadway cuttings and open cut mining sites.

### Background of the Invention

The discussion of the background to the invention that follows is intended to facilitate an understanding of the invention. However, it should be appreciated that the discussion is not an acknowledgement or admission that any aspect of the discussion was part of the common general knowledge as at the priority date of the application.

The rock strata defining a tunnel in the underground mining industry is often reinforced using the combination of rock bolts, rock plates and mesh. Various types of rock bolts are used depending on the type of formation to be reinforced.

One type of rock bolt is a mechanical friction bolt which is installed in a bore hole in the rock strata, the rock bolt includes an elongate expandable split tube with a central rod extending inside the split tube. A nut is provided at a proximal end of the rod, which remains located outside the bore hole when installed. An expansion member is provided at a distal end of the rod for interaction with a wedge member fixed relative to the split tube. The rock plate is fitted over the split tube before inserting it into the bore hole until the rock plate abuts the exposed rock surface of the rock strata. Once in position the nut is rotated, so as to either rotate the central rod or in the case of a threaded rod retract the central rod, which causes the expansion member to retract back against the wedge member and thereby expand the split tube within the bore hole adjacent its distal end. The rock plate can be used to retain the mesh in position, if necessary, while the nut remains exposed sitting proud of both the mesh and the rock plate. Other types of rock bolts include nuts, or nut like features which protrude from the rock plate.

Movement of the rock strata may cause cracks in the rock strata and whilst the function of the bolt(s) is to inhibit movement of pieces of rock, there can still be movement of pieces of rock within the rock strata. When rock strata moves and cracks, the load on a rock bolt may increase causing it to stretch and thereby increasing the risk of rock bolt failure. Where the rock strata defines a tunnel this movement can result in convergence of the tunnel dimensions. It can be beneficial to monitor convergence such that proper measures can be taken early on in response to rock movements in order to maintain the tunnel in a serviceable state.

One solution for monitoring convergence involves manually taking measurements using survey equipment on a regular basis however this is labour intensive and not cost effective. Another solution involves using monitoring stations positioned within the tunnel that take periodic measurements of the tunnel dimensions. These monitoring stations tend to be installed directly to the exposed rock surface via a bracket or the like. It can be difficult mounting the bracket to the rock surface, and commissioning the monitoring station once mounted, particularly if or when the mesh has been installed.

CN 114 934 796 A discloses a visual detection device for surrounding rock damage of a roadway. CN 211 904 054 U discloses a variable-angle fixing device of a roadway convergence laser range finder. US 2018/313707 A1 discloses A monitoring system includes a fastener. A sensor is coupled to the fastener. A circuit board is electrically coupled to the sensor. An antenna electrically coupled to the circuit board. EP 3 839 204 A1 discloses a sensor assembly for a rock bolt, wherein the rock bolt comprises a central rod, a split tube for being fitted around the central rod, a wedge anchor assembly fitted to the central rod, a rock plate with a hole. It is an object of the present invention to provide a sensor apparatus for use in a tunnel that provides improved monitoring of convergence compared to other sensor apparatus that are currently available, or that at least provides the consumer with an alternative.

### Summary of the Invention

According to the present invention there is provided a sensor apparatus for use in a tunnel having at least one rock bolt installed in rock strata defining the tunnel, the sensor apparatus including a housing defining an operating space, at least one sensor device attached to the housing configured for detecting convergence of the tunnel in the vicinity of the sensor device, a battery configured to provide power to at least the sensor device characterised in that the sensor apparatus includes a mount that is positioned to a rear of the housing for attachment to the rock bolt, and a joint that is adjustable so as to allow for adjustment of an orientation of the sensor device relative to the mount. The applicant has appreciated that by mounting the sensor apparatus to the rock bolt itself, as opposed to the rock strata, mesh or even the plate provides a relatively stable location from which to detect convergence in the tunnel.

The mount includes a socket configured for receiving the rock bolt therein. This enables the mount to be attached to the rock bolt without any adjustment of modification of the rock bolt. The socket may be configured for securely fastening to the rock bolt, and in such an arrangement it is preferred that the socket is a threaded socket configured for threaded engagement with a complementary thread on the nut of the rock bolt. This arrangement is suitable for a rock bolt where the nut is fixed to rotate with the central rod, however in an alternative arrangement where the nut is configured to rotate relative to a threaded central rod the socket can engage the thread of the central rod that is exposed. Alternatively, the mount may be secured to the rock bolt by other means such as an adhesive or the like.

The sensor apparatus preferably including a mount dampener for positioning between the rock bolt and the mount so as to inhibit unintentional loosening of the mount from the rock bolt. The mount dampener may take any suitable form and in one arrangement it includes an elastomer member. Where the mount includes a socket the elastomer member may take the form of a disc and be located at the blind end of the socket so that when the mount is secured to the rock bolt the disc is compresses. The applicant has appreciated that such an arrangement absorbs at least some of vibrations that may be transferred from the rock bolt to sensor apparatus that would otherwise tend to cause the mount to loosen. Clearly mount dampeners of other forms for inhibiting unintentional loosening of the mount from the rock bolt are possible.

According to the invention, the sensor apparatus includes an articulated joint acting between the mount and the housing so as to allow adjustment of the housing relative to the mount and thereby adjust the orientation of the sensor device relative to the mount. This arrangement allows for the sensor device to target specific rock surfaces within the tunnel by adjusting the housing relative to the mount. The articulated joint is a ball and socket joint with either one of the mount or the housing having a socket. The ball may be formed with, or attached to, the other of mount or housing. However in the preferred arrangement the housing is formed with the socket and the mount includes a ball. According to the invention the joint includes a joint dampener acting between the ball and the socket so as to inhibit unintentional relative movement therebetween. The joint dampener may be made from any suitable material and in on one arrangement the joint damper is formed from an elastomer and shaped to cup the ball when the joint is assembled.

The sensor apparatus preferably includes a lock member that is adjustable between a release condition and a locked condition in which it the joint is rendered adjustable and fixed respectively. This arrangement allows for the orientation of the housing to be fixed once a preferred orientation has been selected. The lock member could act directly between the housing and the mount however it is preferably configured to interact with the joint. In such an arrangement the lock member may be configured to interact with the housing so as to be rotatable relative thereto from a front of the housing when adjusting between the release condition and the locked condition. The housing may include a threaded aperture, and the lock member is configured with a complementary thread for interacting with the threaded aperture. This preferred arrangement allows for the lock member to be manually adjusted from the front of the housing once the installer has aligned the sensor device on the targeted rock surface.

The housing may take any suitable form and in one arrangement the housing includes a front shell and a rear shell that are fastened together and are configured to accommodate at least one housing gasket therebetween to inhibit the ingress of moisture into the operating space. The front shell and rear shell may be configured to snap engage each other or adapted to accommodate threaded fasteners so as to fasten together. It is further preferred that one of the front shell or rear shell are configured to define a battery space which is separate from the operating space for accommodating the battery. It is further preferred that sensor apparatus include a battery flap that is configured to engage one of the front shell or the rear shell and accommodate a battery gasket therebetween to inhibit the ingress of moisture into the battery space. This arrangement allows for access to the battery space, so that the battery can be replaced, without exposing the operating space.

The sensor device may take any suitable form so that it can detect convergence. In a preferred form the sensor device is a laser distance sensor configured for detecting said convergence of the tunnel in the vicinity of the sensor device by measuring a distance to an exposed rock surface located remote from the rock bolt. The laser distance sensor may be located anywhere on the housing however it is preferred that housing is configured to accommodate the laser distance sensor within the operating space, and the housing includes a window through which a laser beam can project. This arrangement protects the laser distance sensor form the harsh environment of the mining tunnel.

It is preferred that the sensor apparatus includes a PCB having wireless communication circuitry configured to transmit data collected from the sensor device to a WIFI network or a Bluetooth device.

### Brief Description of the Drawings

In order that the invention may be more fully understood, some embodiments will now be described with reference to the figures in which:
Figure 1 is a schematic cross sectional view of the sensor apparatus installed in a tunnel.
Figure 2 is an isometric view of the sensor apparatus attached to a rock bolt.
Figure 3 is an isometric view of a preferred embodiment of a rock bolt.
Figure 4 is an isometric view of the central rod of the rock bolt from Figure 3.
Figure 5 is a partially exploded isometric view of the sensor apparatus, rock plate and rock bolt from Figure 2.
Figure 6 is an alternate perspective view of the sensor apparatus, rock plate and rock bolt from Figure 5.
Figure 7 is a side elevation view of the sensor apparatus, rock plate and rock bolt, with the sensor apparatus detached from the nut of the rock bolt from figure 5.
Figure 8 is the side elevation view from Figure 7 with the sensor apparatus attached to the nut of the rock bolt.
Figure 9 is a cross sectional view of the sensor apparatus attached to the rock bolt with a lock member in a release condition.
Figure 10 is the sensor apparatus from Figure 9 with the lock member in the locked condition.
Figure 11 is an exploded isometric view of the sensor apparatus.
Figure 12 is an exploded isometric view of the sensor apparatus from Figure 11 from an alternate perspective.
Figure 13 is a plan view of a front shell of the housing.
Figure 14 is a cross sectional view of the front shell of the housing through X-X of Figure 13.
Figure 15 is a cross sectional view of the tunnel from Figure 1 with the sensor apparatus communicating with a data mule in the vehicle.

### Detailed Description

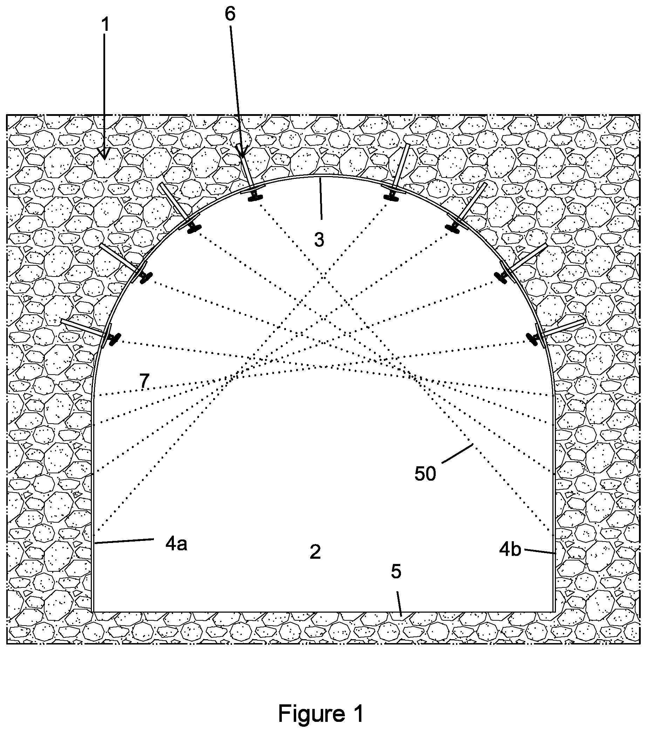

Figure 1 is a schematic illustration of rock strata 1 that has been excavated to define a tunnel 2. More specifically the rock strata 1 has been excavated to define an arched ceiling 3, opposed side walls 4a, 4b and a floor 5. The tunnel is reinforced by a plurality of rock bolts 6, rock plates 7 and mesh 8. Whilst Figure 1 illustrates the rock bolts 6 being positioned in the ceiling only, it should be understood that they may also be positioned in the side walls for a 4a, 4b as well.

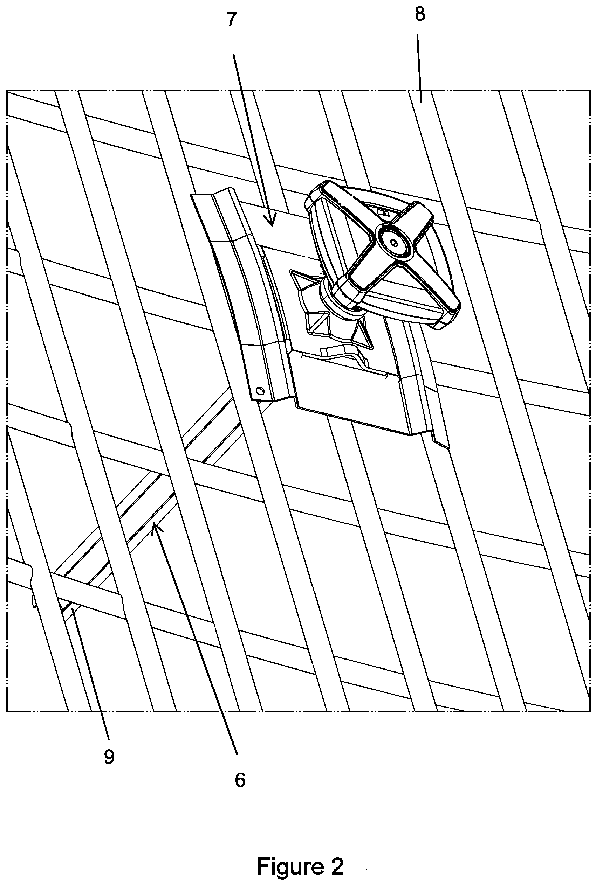

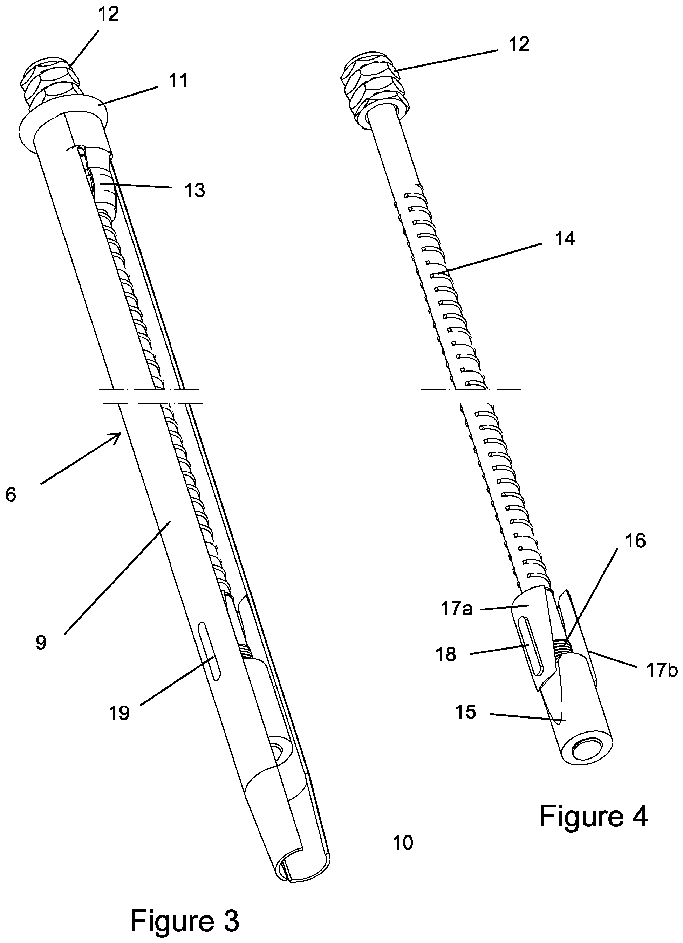

Figure 2 illustrates an isometric view of the reinforcement in greater detail. The rock plate 7 can be seen positioned over the mesh 8 with the rock bolt 6 behind the mesh 8. The rock strata 1 has not been included in this Figure for ease of explanation. Furthermore, whilst Figure 2 illustrates the rock bolt 6 being in the form of a hollow split tube 9 this is only part of the features of the rock bolt 6. The rock bolt 6 is illustrated in greater detail with reference to Figure 3 and Figure 4. Figure 3 illustrates the split tube 9 being formed with a frusto-conical portion 10 at a distal end thereof, and a flange 11 adjacent a proximal end of the split tube 9. A nut 12 and a bushing 13 are positioned on either side of the flange 11. Figure 4 illustrates the rock bolt 6 with the split tube 9 and bushing 13 removed to show more clearly a central rod 14. The central rod 14 extends from the nut 12 at the proximal end to a thread 16 at its distal end. An expansion member 15 is located on the thread 16 at the distal end of the central rod 14. The expansion member 15 interacts with a pair of wedge elements 17a, 17b which each include an elongate locating protrusion 18 (only one of which is visible) which seats within an elongate aperture 19 (see figure 3) in the split tube 9. The wedge elements 17a, 17b are also welded to the split tube 9 to retain them in this position. This arrangement causes the wedge elements 17a, 17b to move laterally when the expansion member 15 retracts from the distal end towards the proximal end as a result of rotation of the central rod 14 by rotating the nut 12. When the rock bolt 6 is inserted in a bore hole (not shown) in the rock strata 1, this lateral movement of the wedge element 17a, 17b will cause the split tube 9 to expand and engage the rock strata 1 surrounding the bore hole. It will be appreciated by those skilled in the art that the rock bolt as hereinbefore described is merely one version of rock bolt available, and the invention is not limited to this one form of rock bolt 6 hereinbefore described whereby the nut 12 rotates with the central rod 14.

It should be noted that in the illustrations other than Figures 3 and 4, various elements of the rock bolt 6 have been removed to simplify the explanation.

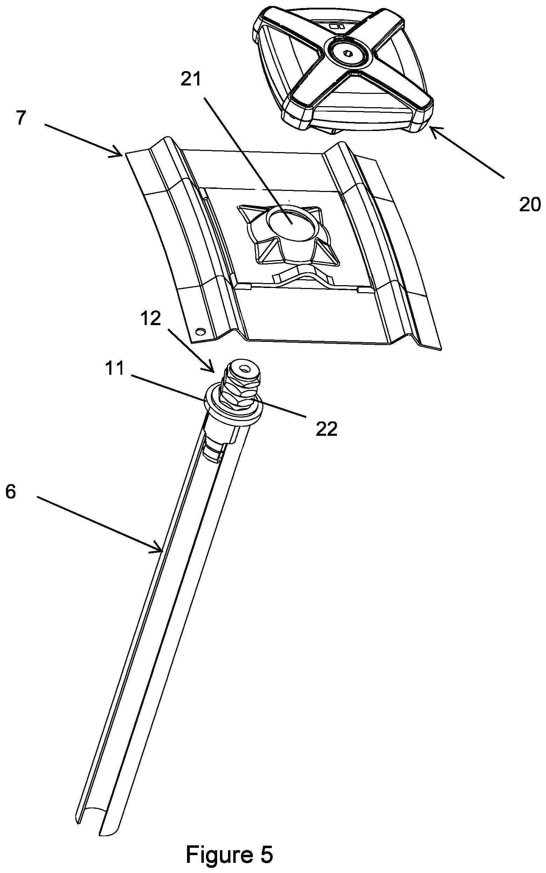

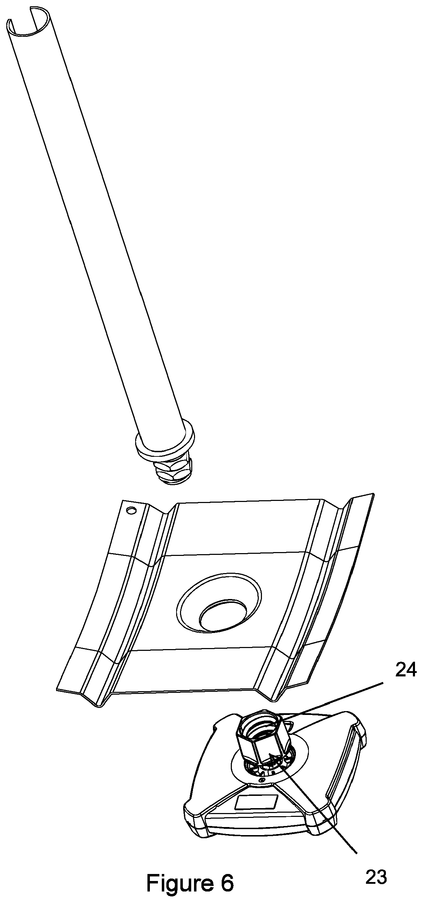

Referring now to Figure 5 which illustrates the rock bolt 6, the rock plate 7 and a preferred embodiment of a sensor apparatus 20 according to the invention. It can be appreciated from Figure 5 that the rock plate 7 has a central aperture 21 formed therein, and whilst the rock plate 7 is illustrated positioned between the rock bolt 6 and the sensor apparatus 20, the distal end of the rock bolt 6 is to inserted through the central aperture 21 so that the flange 11 abuts the rock plate 7. Figure 5 not only illustrates the nut 12 having a hexagonal external surface, but it is also formed with a helical groove or thread 22. Referring to Figure 6 which illustrates the sensor apparatus 20 including a mount 23 also formed with a hexagonal outer surface and a threaded socket 24 which is adapted to interact with the thread 22 on the nut 12.

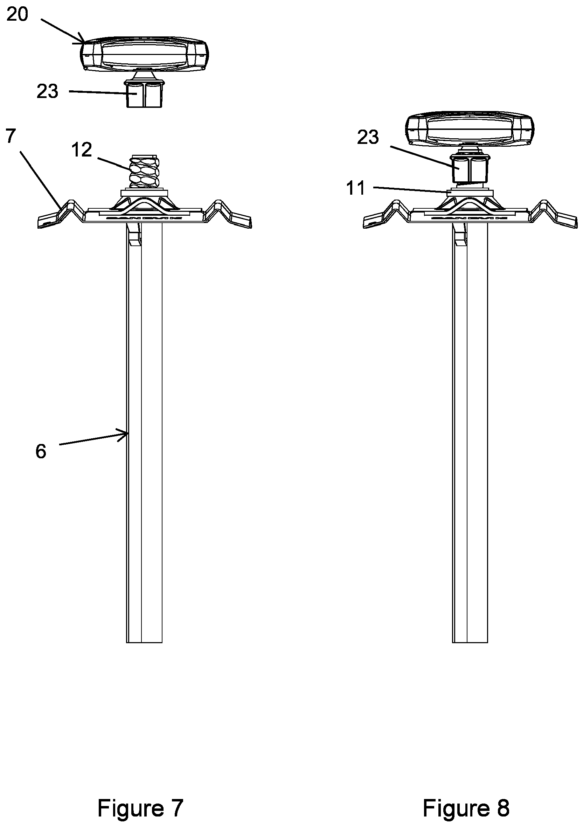

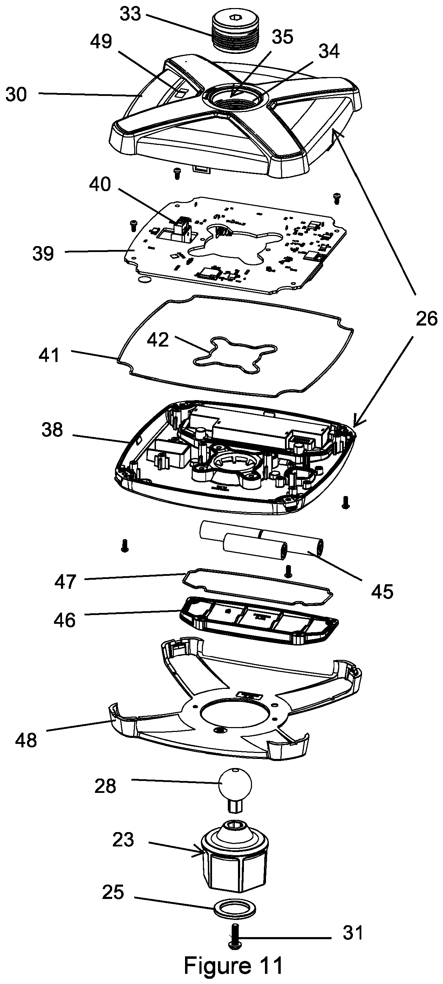

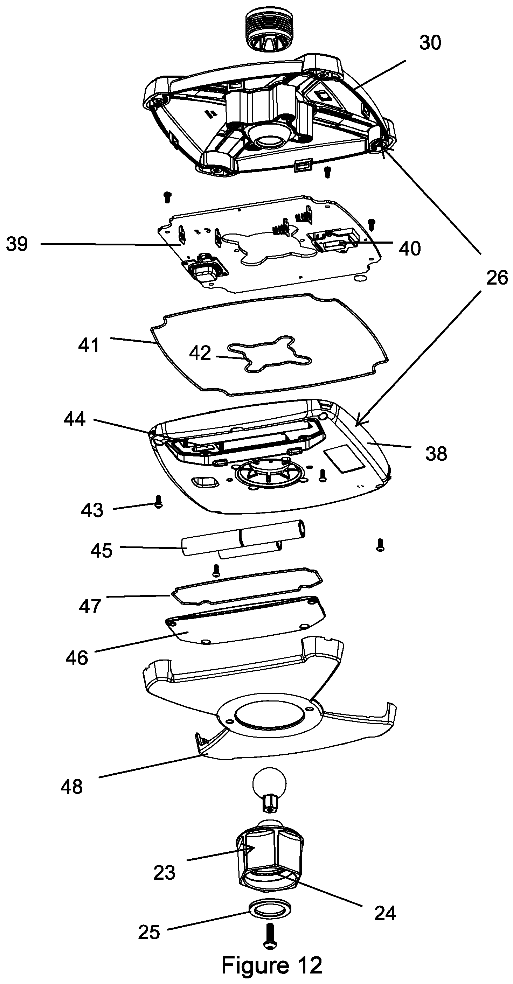

Referring now to Figure 7 and Figure 8 which illustrate in summary the rock bolt 6, the rock plate 7 and the sensor apparatus 20 whereby the mount 23 is spaced from the nut 12 in Figure 7, whilst the mount 23 is threaded on to the threaded nut 22 in Figure 8. It should be noted that Figure 8 illustrates the mount 23 slightly spaced from the flange 11 of the split tube 9 even when the nut 12 is fully inserted into the socket 24 of the mount. Figures 11 and 12 illustrate a mount dampener 25 in the shape of a ring adjacent the mount 23 which is positioned at a blind end of the socket 24. The mount dampener 25 is adapted to absorb vibrations that would otherwise transfer from the rock bolt 6 to the mount 23, in particular so as to inhibit the unintentional loosening of the mount 23 from the rock bolt 6.

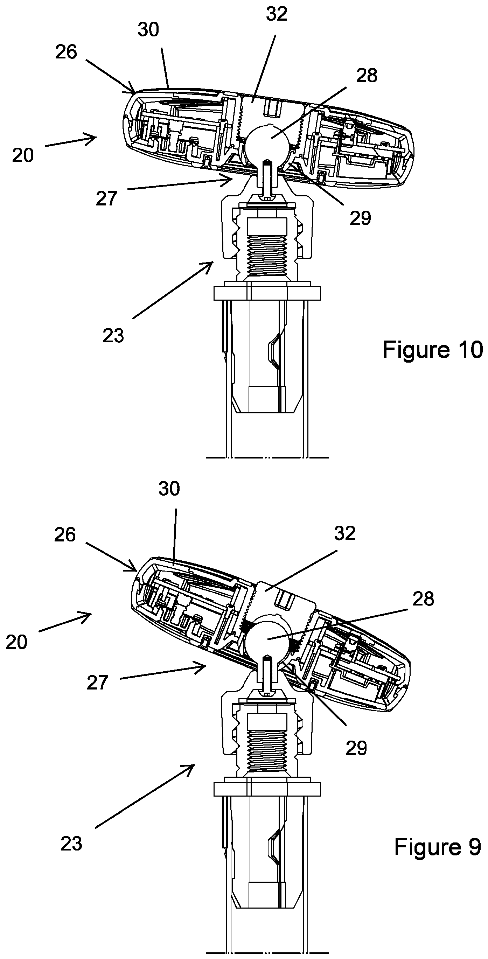

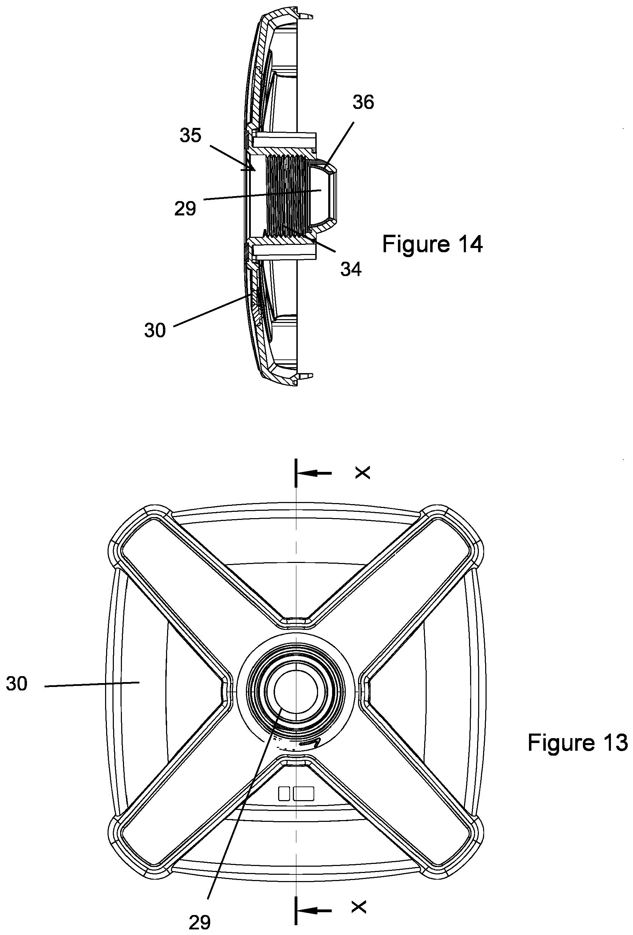

Referring now to Figure 9 and Figure 10 which illustrate the sensor apparatus 20 having a housing 26 which is connected to the mount 23 by way of an articulated joint 27. The articulated joint 27 is in the form of a ball 28 and socket 29 (see also Figure 14) whereby the ball 28 is attached to the mount 23, whilst the socket 29 is formed in a front shell 30 forming part of the housing 26. It can be appreciated from Figure 11 and Figure 12 that the ball 28 is fastened to the mount 23 by way of a bolt 31 that is inserted through the socket 24 of the mount 23.

The articulated joint 27 enables the housing 26 to be pivoted relative to the mount 24 in any preferred orientation. A lock member 32 is illustrated in Figure 9 and Figure 10 which is configured to interact with the articulated joint 27. The lock member 32 is shown in a release condition in Figure 9, and in a locked condition in Figure 10. Figure 11 and Figure 12 illustrate the lock member 32 having a cylindrical shape with a thread 33 on the external surface adapted to engage with a thread 34 defining an aperture 35 in the front shell 30 (see also Figure 14). It ought to be appreciated when comparing Figure 10 with Figure 9 that the lock member 32 is rotatable, by a hex key or screwdriver, within the aperture 35 so as to engage the ball 28 when in the locked condition. The socket 29 includes an elastomer over mould 36 (see figure 14) which acts as a joint dampener between the ball 28 and the socket 29. This is so as to inhibit unintentional relative movement between the ball 28 and the socket 29 when the lock member 32 is in the lock condition.

Referring again now to Figure 11 and Figure 12 where it can be appreciated that the housing 26 is formed by the front shell 30 and a rear shell 38 which define therebetween an operating space for receiving at least a PCB 39 and sensor device 40. An outer gasket 41 and inner gasket 42 are configured to locate between the front shell 30 and the rear shell 38 so as to inhibit the ingress of moisture into the operating space from the perimeter of the housing 26 or the aperture 35 respectively. The front shell 30 is secured to the rear shell 38 by a plurality of bolts or screws 43.

The rear shell 38 includes a battery space 44 (see Figure 12), which is separate from the operating space and adapted to accommodate a plurality of batteries 45. A battery flap 46 encloses the battery space 44 with a battery gasket 47 provided to inhibit the ingress of moisture into the battery space 44. A backing cover 48 is provided for attachment to the rear shell 38 which overlies the battery flap 46. Both the battery flap 46 and backing cover 48 can be attached to the rear shall 38 by way of bolts or screws (not shown).

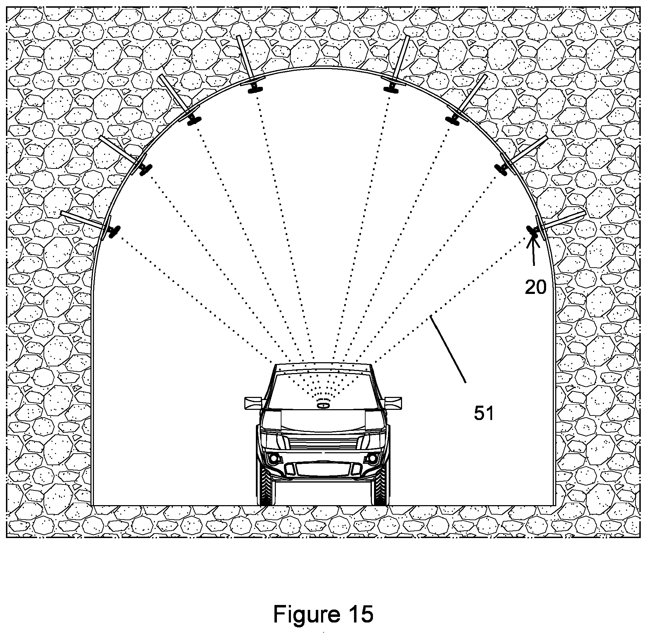

It should be noted from Figure 11 that the sensor device 40 is positioned adjacent a window 49 formed in the front shell 30. When the sensor device 40 is activated as seen in Figure 1 it can produce a laser beam 50 (see figure 1) to take a distance measurement from the sensor 40 to a target section of rock strata 1 within the tunnel 2. The PCB 39 is adapted to log the data of each measurement taken and if that measurement is within an expected threshold distance to save that measurement to a Bluetooth MCU. The data from the Bluetooth MCU can be transferred through a WIFI network during designated intervals throughout a period of time, or transferred to vehicles 51 (data mules) travelling through the tunnel as illustrated in Figure 15.

It ought to be appreciated from the foregoing that the sensor apparatus 20 is hereinbefore described can provide regular monitoring of convergence within the tunnel 2, and supply the information on the convergence at regular intervals via WIFI or Bluetooth to data mules.

## Claims

1. A sensor apparatus (20) for use in a tunnel (2) having at least one rock bolt (6) installed in rock strata (1) defining the tunnel (2), the sensor apparatus (20) including a housing (26) defining an operating space, at least one sensor device (40) attached to the housing (26) configured for detecting convergence of the tunnel (2) in the vicinity of the sensor device (40), a battery (45) configured to provide power to at least the sensor device (40) wherein
the sensor apparatus (20) includes a mount (23) that is positioned to a rear of the housing (26) for attachment to the rock bolt (6), and a joint (27) that is adjustable so as to allow for adjustment of an orientation of the sensor device (40) relative to the mount (23),
**characterized in that**
the mount (23) includes a socket (24) configured for receiving the rock bolt (6) therein, the joint (27) is an articulated joint (27) acting between the mount (23) and the housing (26) so as to allow adjustment of the housing (26) relative to the mount (23) and thereby adjust the orientation of the sensor device (40) relative to the mount (23), the articulated joint (27) is a ball and socket joint (27) with either one of the mount (23) or the housing (26) having the socket (29),
and including a joint dampener (36) acting between the ball (28) and the socket (29) so as to inhibit unintentional relative movement therebetween.

2. A sensor apparatus (20) according to claim 1 wherein the socket (24) is configured for securely fastening to a nut (12) adjacent a proximal end of the rock bolt (6).

3. A sensor apparatus (20) according to claim 2 wherein the socket (12) is a threaded socket (12) configured for threaded engagement with a complementary thread (22) on an external surface of the nut (12) of the rock bolt (6).

4. A sensor apparatus (20) according to any one of the preceding claims including a mount dampener (25) for positioning between the rock bolt (6) and the mount (23) so as to inhibit unintentional loosening of the mount (23) relative to the rock bolt (6).

5. A sensor apparatus (20) according to any one of the preceding claims including a lock member (32) that is configured to interact with the joint (27) and is adjustable between a release condition and a locked condition in which the joint (27) is rendered adjustable and fixed respectively.

6. A sensor apparatus (20) according to claim 5 wherein the lock member (32) is configured to interact with the housing (26) so as to be rotatable relative thereto from a front of the housing (26) when adjusting between the release condition and the locked condition.

7. A sensor apparatus (20) according to claim 6 wherein the housing (26) includes a threaded aperture (33), and the lock member is configured with a complementary thread (34) for interacting with the threaded aperture (33).

8. A sensor apparatus (20) according to any one of the preceding claims wherein the housing (26) includes a front shell (30) and a rear shell (38) that are fastened together and are configured to accommodate at least one housing gasket (41, 42) therebetween to inhibit the ingress of moisture into the operating space, and one of the front shell (30) or rear shell (38) are configured to define a battery space (44) which is separate from the operating space for accommodating the battery (45), and including a battery flap (46) that is configured to engage one of the front shell (30) or the rear shell (38) and accommodate a battery gasket (47) therebetween to inhibit the ingress of moisture into the battery space (44).

9. A sensor apparatus (20) according to any one of the preceding claims wherein the sensor device (40) includes a laser distance sensor (40) configured for detecting said convergence of the tunnel in the vicinity of the sensor device (40) by measuring a distance to an exposed rock surface located remote from the rock bolt (6).

10. A sensor apparatus (20) according to claim 9 wherein the housing (26) is configured to accommodate the laser distance sensor (40) within the operating space, and the housing (26) includes a window (49) through which a laser beam (50) can project from the laser distance sensor (40).

11. A sensor apparatus (20) according to any one of the preceding claims including a PCB (39) having wireless communication circuitry configured to transmit data collected from the sensor device (40) to a WIFI network or a Bluetooth device.

## Patentansprüche

1. Sensoreinrichtung (20) zur Verwendung in einem Tunnel (2), der mindestens einen Felsanker (6) aufweist, der in Felsschichten (1) installiert ist, die den Tunnel (2) definieren, wobei die Sensoreinrichtung (20) ein Gehäuse (26) beinhaltet, das einen Betriebsraum definiert, mindestens eine an dem Gehäuse (26) angebrachte Sensorvorrichtung (40), die dafür konfiguriert ist, Konvergenz des Tunnels (2) in der Nähe der Sensorvorrichtung (40) zu erkennen, eine Batterie (45), die dazu konfiguriert ist, mindestens die Sensorvorrichtung (40) mit Strom zu versorgen, wobei die Sensoreinrichtung (20) eine Halterung (23), die an einer Rückseite des Gehäuses (26) positioniert ist, zur Befestigung am Felsanker (6), und ein Gelenk (27) beinhaltet, das verstellbar ist, um das Verstellen einer Ausrichtung der Sensorvorrichtung (40) relativ zur Halterung (23) zu ermöglichen,
**dadurch gekennzeichnet, dass**
die Halterung (23) eine Buchse (24) beinhaltet, die dafür konfiguriert ist, den Felsanker (6) in sich aufzunehmen, das Gelenk (27) ein Knickgelenk (27) ist, das zwischen der Halterung (23) und dem Gehäuse (26) wirkt, um das Verstellen des Gehäuses (26) relativ zur Halterung (23) zu ermöglichen und dadurch die Ausrichtung der Sensorvorrichtung (40) relativ zur Halterung (23) zu verstellen, das Knickgelenk (27) ein Kugelgelenk (27) mit Buchse ist, wobei eines der Halterung (23) oder des Gehäuses (26) die Buchse (29) aufweist, und einen Gelenkdämpfer (36) beinhaltet, der zwischen der Kugel (28) und der Buchse (29) wirkt, um ungewollte Relativbewegung zwischen diesen zu verhindern.

2. Sensoreinrichtung (20) nach Anspruch 1, wobei die Buchse (24) dafür konfiguriert ist, sicher an einer Mutter (12) an ein proximales Ende des Felsankers (6) angrenzend befestigt zu werden.

3. Sensoreinrichtung (20) nach Anspruch 2, wobei die Buchse (12) eine Gewindebuchse (12) ist, die für Gewindeeingriff mit einem komplementären Gewinde (22) auf einer Außenfläche der Mutter (12) des Felsankers (6) konfiguriert ist.

4. Sensoreinrichtung (20) nach einem der vorstehenden Ansprüche, die einen Halterungsdämpfer (25) zum Positionieren zwischen dem Felsanker (6) und der Halterung (23) beinhaltet, um ungewolltes Lockern der Halterung (23) relativ zum Felsanker (6) zu verhindern.

5. Sensoreinrichtung (20) nach einem der vorstehenden Ansprüche, die ein Verriegelungselement (32) beinhaltet, das dazu konfiguriert ist, mit dem Gelenk (27) zusammenzuwirken, und zwischen einem Freigabezustand und einem Verriegelungszustand, in dem das Gelenk (27) verstellbar gemacht bzw. fixiert wird, verstellt werden kann.

6. Sensoreinrichtung (20) nach Anspruch 5, wobei das Verriegelungselement (32) dazu konfiguriert ist, mit dem Gehäuse (26) zusammenzuwirken, um beim Verstellen zwischen dem Freigabezustand und dem Verriegelungszustand von einer Vorderseite des Gehäuses (26) aus relativ zu diesem gedreht werden zu können.

7. Sensoreinrichtung (20) nach Anspruch 6, wobei das Gehäuse (26) eine Gewindeöffnung (33) beinhaltet und das Verriegelungselement mit einem komplementären Gewinde (34) zum Zusammenwirken mit der Gewindeöffnung (33) konfiguriert ist.

8. Sensoreinrichtung (20) nach einem der vorstehenden Ansprüche, wobei das Gehäuse (26) eine vordere Schale (30) und eine hintere Schale (38) beinhaltet, die aneinander befestigt und dazu konfiguriert sind, zwischen ihnen mindestens eine Gehäusedichtung (41, 42) aufzunehmen, um das Eindringen von Feuchtigkeit in den Betriebsraum zu verhindern, und eine der vorderen Schale (30) oder der hinteren Schale (38) dazu konfiguriert ist, einen Batterieraum (44), der vom Betriebsraum getrennt ist, zum Aufnehmen der Batterie (45) zu definieren, und eine Batterieklappe (46) beinhaltet, die dazu konfiguriert ist, in eine der vorderen Schale (30) oder der hinteren Schale (38) einzugreifen und zwischen ihnen eine Batteriedichtung (47) aufzunehmen, um das Eindringen von Feuchtigkeit in den Batterieraum (44) zu verhindern.

9. Sensoreinrichtung (20) nach einem der vorstehenden Ansprüche, wobei die Sensorvorrichtung (40) einen Laserabstandssensor (40) beinhaltet, der dafür konfiguriert ist, die Konvergenz des Tunnels in der Nähe der Sensorvorrichtung (40) durch messen eines Abstands zu einer freiliegenden Felsoberfläche, die sich vom Felsanker (6) entfernt befindet, zu erkennen.

10. Sensoreinrichtung (20) nach Anspruch 9, wobei das Gehäuse (26) dazu konfiguriert ist, den Laserabstandssensor (40) im Betriebsraum aufzunehmen, und das Gehäuse (26) ein Fenster (49) beinhaltet, durch das ein Laserstrahl (50) vom Laserabstandssensor (40) projizieren kann.

11. Sensoreinrichtung (20) nach einem der vorstehenden Ansprüche, die eine Leiterplatte (39) beinhaltet, welche Drahtloskommunikationsschaltungen aufweist, die dazu konfiguriert sind, Daten, die von der Sensorvorrichtung (40) gesammelt werden, an ein WIFI-Netzwerk oder eine Bluetooth-Vorrichtung zu übertragen.

## Revendications

1. Appareil de détection (20) pour utilisation dans un tunnel (2) présentant au moins un boulon d'ancrage (6) installé dans une couche rocheuse (1) définissant le tunnel (2), l'appareil de détection (20) incluant un boîtier (26) définissant un espace de fonctionnement, au moins un dispositif capteur (40) fixé au boîtier (26) configuré pour détecter la convergence du tunnel (2) à proximité du dispositif capteur (40), une batterie (45) configurée pour alimenter au moins le dispositif capteur (40), dans lequel l'appareil de détection (20) inclut un support (23), qui est positionné à l'arrière du boîtier (26), à fixer au boulon d'ancrage (6), et un joint (27) qui est réglable de manière à permettre le réglage d'une orientation du dispositif capteur (40) par rapport au support (23),
**caractérisé en ce que**
le support (23) inclut une douille (24) configurée pour recevoir le boulon d'ancrage (6) à l'intérieur de celle-ci, le joint (27) est un joint articulé (27) agissant entre le support (23) et le boîtier (26) de manière à permettre le réglage du boîtier (26) par rapport au support (23) et ainsi régler l'orientation du dispositif capteur (40) par rapport au support (23), le joint articulé (27) est un joint à rotule (27) avec soit le support (23), soit le boîtier (26) présentant la douille (29), et incluant un amortisseur de joint (36) agissant entre la rotule (28) et la douille (29) de manière à empêcher un mouvement relatif involontaire entre eux.

2. Appareil de détection (20) selon la revendication 1, dans lequel la douille (24) est configurée pour se fixer solidement à un écrou (12) adjacent à une extrémité proximale du boulon d'ancrage (6).

3. Appareil de détection (20) selon la revendication 2, dans lequel la douille (12) est une douille filetée (12) configurée pour une mise en prise filetée avec un filetage complémentaire (22) sur une surface externe de l'écrou (12) du boulon d'ancrage (6).

4. Appareil de détection (20) selon l'une quelconque des revendications précédentes, incluant un amortisseur de support (25) à positionner entre le boulon d'ancrage (6) et le support (23) de manière à empêcher un desserrage involontaire du support (23) par rapport au boulon d'ancrage (6).

5. Appareil de détection (20) selon l'une quelconque des revendications précédentes, incluant un élément de verrouillage (32) qui est configuré pour interagir avec le joint (27) et est réglable entre un état de libération et un état verrouillé dans lesquels le joint (27) est respectivement rendu réglable et fixe.

6. Appareil de détection (20) selon la revendication 5, dans lequel l'élément de verrouillage (32) est configuré pour interagir avec le boîtier (26) de manière à pouvoir tourner par rapport à celui-ci depuis l'avant du boîtier (26) lors du réglage entre l'état de libération et l'état verrouillé.

7. Appareil de détection (20) selon la revendication 6, dans lequel le boîtier (26) inclut une ouverture filetée (33), et l'élément de verrouillage est configuré avec un filetage complémentaire (34) pour interagir avec l'ouverture filetée (33).

8. Appareil de détection (20) selon l'une quelconque des revendications précédentes, dans lequel le boîtier (26) inclut une coque avant (30) et une coque arrière (38) qui sont assemblées et sont configurées pour loger au moins un joint d'étanchéité de boîtier (41, 42) entre elles pour empêcher la pénétration d'humidité dans l'espace de fonctionnement, et l'une de la coque avant (30) ou de la coque arrière (38) est configurée pour définir un espace de batterie (44) qui est séparé de l'espace de fonctionnement pour loger la batterie (45), et incluant un volet de batterie (46) qui est configuré pour venir en prise avec l'une de la coque avant (30) ou de la coque arrière (38) et loger un joint d'étanchéité de batterie (47) entre eux pour empêcher la pénétration d'humidité dans l'espace de batterie (44).

9. Appareil de détection (20) selon l'une quelconque des revendications précédentes, dans lequel le dispositif capteur (40) inclut un télémètre laser (40) configuré pour détecter ladite convergence du tunnel à proximité du dispositif capteur (40) en mesurant une distance à une surface rocheuse apparente située à l'écart du boulon d'ancrage (6).

10. Appareil de détection (20) selon la revendication 9, dans lequel le boîtier (26) est configuré pour loger le télémètre laser (40) dans l'espace de fonctionnement, et le boîtier (26) inclut une fenêtre (49) à travers laquelle un faisceau laser (50) peut être projeté à partir du télémètre laser (40).

11. Appareil de détection (20) selon l'une quelconque des revendications précédentes, incluant une PCB (39) présentant un ensemble de circuits de communication sans fil configuré pour transmettre des données collectées à partir du télémètre (40) à un réseau Wi-Fi ou à un dispositif Bluetooth.
